# EUROPÄISCHE PATENTSCHRIFT

(11) **EP 4 415 598 B1**
(45) Veröffentlichungstag und Bekanntmachung des Hinweises auf die Patenterteilung: **10.09.2025**
(21) Anmeldenummer: 22801042.7
(22) Anmeldetag: 05.10.2022
(51) Int. Cl.: F24C 7/08, F25D 29/00, A47L 15/42

(54) **VERFAHREN UND HAUSHALTGERÄT ZUM PRÄSENTIEREN EINER GERÄTEINFORMATION**
METHOD AND HOUSEHOLD APPLIANCE FOR PRESENTING APPLIANCE-RELATED INFORMATION
PROCÉDÉ ET APPAREIL ÉLECTROMÉNAGER ASSOCIÉ DE PRÉSENTATION D'INFORMATIONS RELATIVES À L'APPAREIL

(30) Priorität: 12.10.2021 DE 102021126374
(43) Veröffentlichungstag der Anmeldung: 21.08.2024
(73) Patentinhaber: Miele & Cie. KG, 33332 Gütersloh (DE)
(72) Erfinder: NÖLLER, Horst, 33335 Gütersloh (DE); BAUMGART, Thorsten, 33758 Schloß Holte - Stukenbrock (DE)
(86) Internationale Anmeldenummer: PCT/EP2022/077678
(87) Internationale Veröffentlichungsnummer: WO 2023/061821

(56) Entgegenhaltungen:
- CN-A- 106 595 173
- CN-A- 108 759 276
- CN-A- 110 375 340
- US-A1- 2017 328 577

## Beschreibung

Die Erfindung betrifft ein Verfahren und eine Vorrichtung zum Präsentieren einer Geräteinformation sowie ein Haushaltgerät.

Haushaltgeräte, wie zum Beispiel Backöfen oder Dampfgarer, können als Teil eines Küchenkonzepts als vollintegriertes Gerät, das mit einer Möbelfront verblendet ist, verbaut werden. Bei einer solchen Verblendung kann der jeweilige Betriebszustand des Geräts von einem Nutzer nicht direkt erfasst werden, da kein Display nach außen sichtbar ist.

Aus den Druckschriften DE 10 2017 207 222 A1 ist ein Kühlgerät bekannt, welches eine Projektionseinrichtung aufweist, die Informationen in den Kühlraum projiziert.

Die Druckschrift DE 10 2015 101 174 A1 beschreibt ein Kochfeld mit einer Kochfeldplatte und einem unter der Kochfeldplatte angeordneten Projektor, welcher Informationen auf eine oberhalb der Kochfeldplatte angeordnete Projektionsfläche projizieren kann.

In der Druckschrift DE 10 2009 026 447 A1 ist gezeigt, dass ein in einer Dunstabzugshaube integrierter Projektor auf ein Küchenmöbel, insbesondere eine Küchenarbeitsplatte Informationen proiizieren kann.

In der Druckschrift CN 106 595 173 A ist ein Verfahren zum Präsentieren einer Geräteinformation eines mit einer Blende verblendeten Haushaltgeräts gezeigt. Das Verfahren beinhaltet ein Bewegen eines Bauteils des Haushaltgeräts ansprechend auf ein Bewegungssignal mittels einer Bewegungseinheit von einer Inaktiv-Position in eine Aktiv-Position, wobei das die Aktiv-Position eine gegenüber der Inaktiv-Position versetzte Position repräsentiert, wobei bei der Inaktiv-Position das Bauteil und die Blende auf einer Ebene angeordnet sind, und wobei die Bewegungseinheit einen steuerbaren Elektromotor und eine mit dem Elektromotor gekoppelte Mechanik zum Verfahren des Bauteils umfasst (4). Das Verfahren beinhaltet weiterhin ein Projizieren der Geräteinformation auf die Blende mittels eines Projektionssignal durch eine Projektionseinheit, um die Geräteinformation sichtbar zu präsentieren.

Der Erfindung stellt sich die Aufgabe ein verbessertes Verfahren und eine verbesserte Vorrichtung zum Präsentieren einer Geräteinformation sowie ein verbessertes Haushaltgerät zu schaffen. Erfindungsgemäß wird diese Aufgabe durch ein Verfahren zum Präsentieren einer Geräteinformation, eine entsprechende Vorrichtung und ein Haushaltgerät mit den Merkmalen der Hauptansprüche gelöst. Vorteilhafte Ausgestaltungen und Weiterbildungen der Erfindung ergeben sich aus den nachfolgenden abhängigen Ansprüchen.

Die mit der Erfindung erreichbaren Vorteile bestehen in einer verbesserten Sichtbarkeit von angezeigten Geräteinformationen eines verblendeten Haushaltgeräts.

Erfindungsgemäß wird ein Verfahren zum Präsentieren einer Geräteinformation eines verblendeten Haushaltgeräts gemäß Anspruch 1, sowie ein Haushaltsgerät zum Durchführen eines solchen Verfahrens nach Anspruch 7 vorgestellt. Dabei umfasst das Verfahren unter anderem einen Schritt des Bewegens des Haushaltgeräts von einer Inaktiv-Position in eine Aktiv-Position, wobei die Aktiv-Position eine zu einer an dem Haushaltgerät angeordneten Fläche versetzte Position repräsentiert, und einen Schritt des Projizierens der Geräteinformation auf die an dem Haushaltgerät angeordnete Fläche, um die Geräteinformation sichtbar zu präsentieren. Bei dem Haushaltgerät kann sich zum Beispiel um ein Gargerät, ein Getränkezubereitungsgerät oder eine Schublade handeln. Beispielsweise kann das Haushaltgerät ein Küchengerät sein, dass im betriebsbereiten Zustand in einer Küchenzeile verbaut sein kann. Es kann sich somit um ein im verbauten Zustand vollintegriertes Gerät handeln. Das Haushaltgerät kann zum Beispiel mit einer Möbelfront verkleidet, das heißt verblendet sein kann. Da eine solche Blende eine Anzeige des Geräts, beispielsweise ein Display, zum Anzeigen von gerätespezifischen Informationen, wie beispielsweise ein ausgewähltes Programm, verdeckt, kann das Haushaltgerät zusätzlich oder alternativ zu einer regulären Anzeige mit dem hier vorgestellten Verfahren betrieben werden. Dabei kann das Haushaltgerät, solange es nicht benutzt wird, in der Inaktiv-Position angeordnet sein. In dieser Position kann es zum Beispiel so nah wie möglich an einer Wand eines Möbelstücks, beispielsweise einer Schrankwand angeordnet sein, wobei die Gerätefront beziehungsweise die Blende des Haushaltgeräts in einer Ebene mit weiteren ebenfalls voll integrierten und verblendeten Geräten und zusätzlich oder alternativ Schränken angeordnet sein kann. Im Schritt des Bewegens wird das Haushaltgerät aus dieser Inaktiv-Position in die Aktiv-Position bewegt. Dabei kann das Haushaltgerät zum Beispiel ein kurzes Stück, zum Beispiel 2 bis 10 cm, nach vorne, das heißt beispielsweise von der Möbelfront wegbewegt werden, wodurch sich ein entsprechender Abstand zwischen der Blende des Haushaltgeräts und weiteren Blenden anderer Haushaltgeräte ergibt. Das Gerät kann also im Schritt des Bewegens ein kurzes Stück aus einer Nische, in der es eingebaut ist, herausgefahren werden. Aufgrund des so bewirkten Abstandes kann im folgenden Schritt des Projizierens die Geräteinformationen, wie beispielsweise das ausgewählte Programm, in dem sich das Haushaltgerät gerade befindet, zum Beispiel mittels einer Projektionseinheit beziehungsweise einem Projektor auf eine der an dem Haushaltgerät angeordneten Möbelflächen (rück-)projiziert werden. Durch die gut sichtbare Projektion kann ein Nutzer vorteilhafterweise auch aus der Distanz die jeweiligen Informationen sehr einfach erkennen, ohne dafür das Gerät oder die Blende öffnen zu müssen.

Erfindungsgemäß wird im Schritt des Bewegens ein Bewegungssignal an eine Bewegungseinheit zum Bewegen des Haushaltgeräts von der Inaktiv-Position in die Aktiv-Position bereitgestellt werden. Zusätzlich wird

im Schritt des Projizierens ein Projektionssignal an eine Projektionseinheit zum Projizieren der Geräteinformation bereitgestellt werden. Beispielsweise kann das Verfahren auf einer Vorrichtung ausgeführt werden, die ausgebildet ist, um Signale einzulesen und zusätzlich oder alternativ bereitzustellen. Das hat den Vorteil, dass das Verfahren optimiert und sowohl geräte- als auch anwenderspezifisch durchgeführt werden kann.

Gemäß einer Ausführungsform kann das Verfahren einen Schritt des Einlesens eines Aktivierungssignals vor dem Schritt des Projizierens umfassen. Dabei kann das Projizieren der Geräteinformation ansprechend auf das Aktivierungssignal erfolgen. Das Aktivierungssignal kann beispielsweise vor dem Schritt des Bewegens erfolgen, zum Beispiel mit dem Einschalten des Haushaltgeräts. Zusätzlich oder alternativ kann das Aktivierungssignal auch nach dem Schritt des Bewegens eingelesen werden. Vorteilhafterweise kann die Projektion der Geräteinformation dadurch unabhängig von dem Schritt des Bewegens durchgeführt werden.

Zudem kann das Aktivierungssignal ein akustisches Signal und zusätzlich oder alternativ eine Annäherung einer Person und zusätzlich oder alternativ eine vorbestimmte Geste der Person repräsentieren. Beispielsweise kann das Aktivierungssignal nur dann situativ aktiviert werden, wenn ein Nutzer eine aktuelle Geräteinformationen sehen möchte. Das hat den Vorteil, dass Energie eingespart werden kann.

Gemäß einer weiteren Ausführungsform kann das Verfahren einen Schritt des Erfassens eines aktuellen Betriebszustand des Haushaltgeräts aufweisen. Dabei kann im Schritt des Projizierens die Geräteinformation den erfassten Betriebszustand repräsentieren. Beispielsweise können Projektionen Informationen über den jeweiligen Betriebszustand des Gerätes geben, wie zum Beispiel Information darüber, dass ein Gerät aktiv ist, aktuelle Statusinformationen, wie zum Beispiel verbleibende Restzeiten eines Programms, Handlungsaufforderungen oder Fehler- oder Störungsmeldungen. Vorteilhafterweise kann dadurch jeweils die Information präsentiert werden, die für einen Nutzer des Haushaltgeräts aktuell relevant sein kann.

Gemäß einer weiteren Ausführungsform kann im Schritt des Projizierens die Geräteinformation in Form eines Klartextes und zusätzlich oder alternativ in Form eines Bildes und zusätzlich oder alternativ in Form von farbigem Licht projiziert werden. Beispielsweise kann bei einer Fehlermeldung ein Warnsymbol, zum Beispiel in rotem Licht, projiziert werden und zusätzlich oder alternativ kann der Fehler in Form eines Klartextes lesbar sein. Das hat den Vorteil, dass für verschiedene Geräteinformationen eine spezifisch für die aktuelle Geräteinformationen passende Art der Projektion verwendet werden kann.

Gemäß einer weiteren Ausführungsform kann der Schritt des Projizierens für eine vorbestimmte Zeitspanne durchgeführt werden. Beispielsweise kann die Projektion der Geräte Information während des gesamten Programms durchgeführt werden. Zusätzlich oder alternativ kann die Projektion auch nur situativ aktiviert und dann für eine Zeitspanne von beispielsweise 2 Minuten durchgeführt werden und zusätzlich oder alternativ für eine Zeitspanne, in der eine Person vor dem Haushaltgerät erfasst wird. Dabei kann die gewünschte Zeitspanne zum Beispiel individuell, beispielsweise bei der Inbetriebnahme des Haushaltgeräts, festgelegt werden. Vorteilhafterweise kann dadurch eine Laufzeit des Verfahrens optimiert und flexibel an die Wünsche eines Nutzers angepasst werden.

Der hier vorgestellte Ansatz schafft ferner eine Vorrichtung, die ausgebildet ist, um die Schritte einer Variante eines hier vorgestellten Verfahrens in entsprechenden Einrichtungen durchzuführen, anzusteuern bzw. umzusetzen. Auch durch diese Ausführungsvariante der Erfindung in Form einer Vorrichtung kann die der Erfindung zugrunde liegende Aufgabe schnell und effizient gelöst werden.

Die Vorrichtung kann ausgebildet sein, um Eingangssignale einzulesen und unter Verwendung der Eingangssignale Ausgangssignale zu bestimmen und bereitzustellen. Ein Eingangssignal kann beispielsweise ein über eine Eingangsschnittstelle der Vorrichtung einlesbares Sensorsignal darstellen. Ein Ausgangssignal kann ein Steuersignal oder ein Datensignal darstellen, das an einer Ausgangsschnittstelle der Vorrichtung bereitgestellt werden kann. Die Vorrichtung kann ausgebildet sein, um die Ausgangssignale unter Verwendung einer in Hardware oder Software umgesetzten Verarbeitungsvorschrift zu bestimmen. Beispielsweise kann die Vorrichtung dazu eine Logikschaltung, einen integrierten Schaltkreis oder ein Softwaremodul umfassen und beispielsweise als ein diskretes Bauelement realisiert sein oder von einem diskreten Bauelement umfasst sein.

Erfindungsgemäß wird ein Haushaltgerät mit einer Variante der zuvor vorgestellten Vorrichtung vorgestellt, wobei das Haushaltgerät unter anderem mit einer Blende verblendet oder verblendbar ist. Diese Kombination hat den Vorteil, dass alle zuvor genannten Vorteile optimal umgesetzt werden können. Alternativ zu einer Anwendung im Haushalt kann der beschriebene Ansatz auch im Zusammenhang mit einem gewerblichen Gerät umgesetzt werden.

Gemäß einer Ausführungsform kann die Vorrichtung eine Projektionseinheit zum Projizieren der Geräteinformation umfassen, wobei die Projektionseinheit an einer Kante des Haushaltgeräts angeordnet sein kann. Beispielsweise kann die Projektionseinheit im eingebauten Zustand des Haushaltgeräts an einer oberen Kante angeordnet sein und nach dem Bewegen das Haushaltgerät die Geräteinformationen nach oben auf eine über dem Haushaltgerät angeordnete Möbel von projizieren. Die Anordnung der Projektionseinheit an einer Kante hat den Vorteil, dass die von den Lichtstrahlen der Projektionseinheit zu überbrückende Distanz möglichst kurz gehalten werden kann, wodurch Energie eingespart werden kann.

Die vorliegenden Offenbarung benennt auch ein Computer-Programmprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann. Wird das Programmprodukt oder Programm auf einem Computer oder einer Vorrichtung ausgeführt, so kann das Programmprodukt oder Programm zur Durchführung, Umsetzung und/oder Ansteuerung der Schritte des Verfahrens nach einer der vorstehend beschriebenen Ausführungsformen verwendet werden.

Ein Ausführungsbeispiel der Erfindung ist in den Zeichnungen rein schematisch dargestellt und wird nachfolgend näher beschrieben. Es zeigt
- Figur 1: eine schematische Seitenansicht eines verblendeten Haushaltgeräts gemäß einem Ausführungsbeispiel;
- Figur 2: ein Ablaufdiagramm eines Ausführungsbeispiels eines Verfahrens zum Präsentieren einer Geräteinformation eines verblendeten Haushaltgeräts;
- Figur 3: ein Ablaufdiagramm eines Ausführungsbeispiels eines Verfahrens zum Präsentieren einer Geräteinformation eines verblendeten Haushaltgeräts; und
- Figur 4: eine schematische Frontansicht einer Küchenzeile mit verblendeten Haushaltgeräten gemäß einem Ausführungsbeispiel.

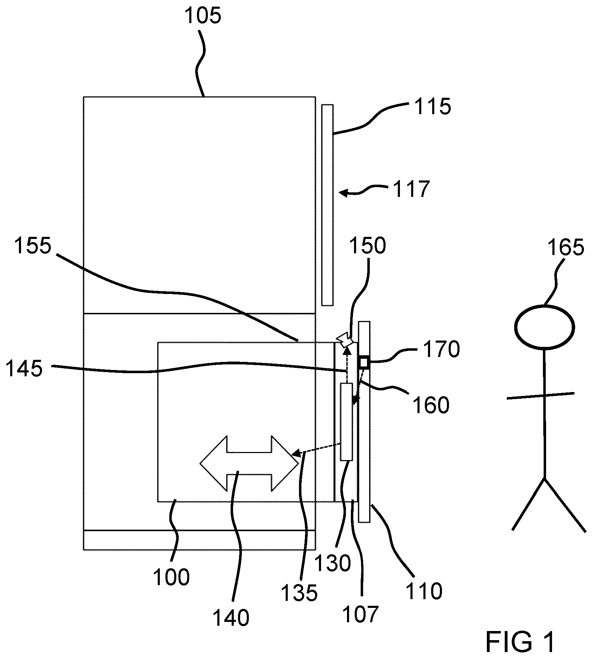

Figur 1 zeigt eine schematische Seitenansicht eines verblendeten Haushaltgeräts 100 gemäß einem Ausführungsbeispiel. Das Haushaltgerät 100 ist in der hier gezeigten Darstellung lediglich beispielhaft in einer unteren Hälfte eines Schranks 105 verbaut, wobei eine Gerätetür 107 des Haushaltgeräts 105 in diesem Ausführungsbeispiel mit einer Blende 110 verblendet ist, die auch als Möbelfront bezeichnet werden kann. Dabei ist die Blende 110 in diesem Ausführungsbeispiel zusammen mit der Gerätetür 107 bewegbar, beispielhaft bei einem Öffnen der Gerätetür 107 mittels einer Eingriffsmulde an der Tür. Die obere Hälfte des Schranks 105 ist mit einer weiteren Blende 115 verblendet, die in diesem Ausführungsbeispiel der Blende 110 gleicht. Dabei ist der Schrank 105 so ausgeformt, dass die Blende 110 und die weitere Blende 115 auf einer Ebene angeordnet sind, wenn das Haushaltgerät 100 in einer Inaktiv-Position angeordnet ist. In der hier gezeigten Darstellung ist das Haushaltgerät 100 in einer Aktiv-Position dargestellt, in der das Haushaltgerät 100 teilweise aus dem Schrank 105 heraus bewegt und damit versetzt zu einer Fläche 117 der weiteren Blende 115 angeordnet ist.

Um das Haushaltgerät 100 von der Inaktiv-Position in die Aktiv-Position zu bewegen, umfasst das Haushaltgerät 100 in diesem Ausführungsbeispiel eine Vorrichtung 130, die ausgebildet ist, um ein Bewegungssignal 135 an eine Bewegungseinheit 140 zum Bewegen des Haushaltgeräts 100 bereitzustellen. Die Bewegungseinheit 140 umfasst einen durch das Bewegungssignal 135 steuerbaren Elektromotor und eine mit dem Elektromotor gekoppelte Mechanik zum Verfahren des Haushaltgeräts 100.

Erfindungsgemäß ist die Bewegungseinheit 140 ausgebildet, um das gesamte Hauhaltgeräts 100 von der Inaktiv-Position in die Aktiv-Position zu verfahren, und umgekehrt. Beispielsweise wird das Haushaltgerät 100 beim Verfahren zwischen den beiden Positionen um einige Zentimeter, beispielsweise um weniger als 10 Zentimeter, entlang eines orthogonal zu der Fläche 117 ausgerichteten Verfahrwegs bewegt.

Die Vorrichtung 130 ist weiterhin ausgebildet, um ein Projektionssignal 145 an eine Projektionseinheit 150 bereitzustellen. Lediglich beispielhaft ist die Projektionseinheit 150, die auch als Projektor bezeichnet werden kann, an einer oberen Kante 155 der Gerätetür 107 angeordnet. Dabei entspricht die obere Kante 155 in diesem Ausführungsbeispiel einer Kante des Haushaltgeräts 100, die der weiteren Blende 115 am Nächsten ist. Unter Verwendung des Projektionssignals 145 ist die Projektionseinheit 150 ausgebildet, um eine Geräteinformation auf die Fläche 117 der weiteren Blende 115 zu projizieren. Beispielsweise umfasst die Projektionseinheit 150 dazu zumindest eine Lichtquelle.

In diesem Ausführung Beispiel erfolgt das Bereitstellen des Projektionssignals 145 lediglich beispielhaft ansprechend auf ein Aktivierungssignals 160. Das Aktivierungssignal 160 repräsentiert in diesem Ausführungsbeispiel eine Annäherung einer Person 165, die lediglich beispielhaft mittels eines Bewegungssensors 170 erfassbar ist. Die Vorrichtung 130 ist dabei lediglich beispielhaft ausgebildet, um das in diesem Ausführungsbeispiel von dem Bewegungssensor 170 bereitgestellte Aktivierungssignal 160 einzulesen und infolgedessen das Projektionssignal 145 bereitzustellen.

In einem anderen Ausführungsbeispiel kann das Aktivierungssignal auch beispielsweise durch manuelles Betätigen einer Taste, durch eine Geste oder durch Sprachsteuerung bereitgestellt werden.

Beispielsweise ist das Haushaltgerät 100 als ein Backofen, ein Backofen mit Mikrowelle, ein Dampfbackofen, ein Dampfgarer mit oder ohne Mikrowelle, ein Dialoggarer, ein Kaffeevollautomat oder als eine Schublade ausgeführt.

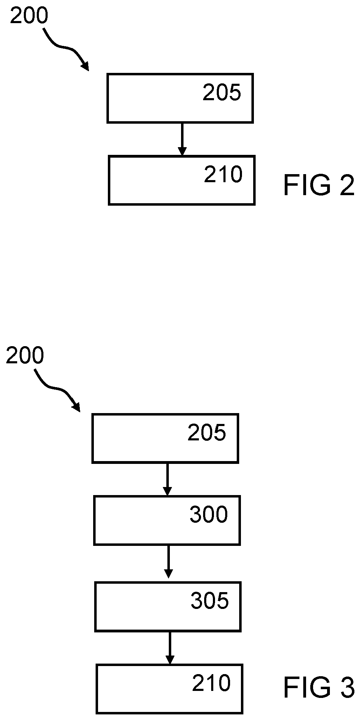

Figur 2 zeigt ein Ablaufdiagramm eines Ausführungsbeispiels eines Verfahrens 200 zum Präsentieren einer Geräteinformation eines verblendeten Haushaltgeräts. Das hier dargestellte Verfahren 200 ist beispielhaft für ein Haushaltgerät, wie es in der vorangegangenen Figur beschrieben wurde, durchführbar. Das Verfahren 200 umfasst einen Schritt 205 des Bewegens des Haushaltgeräts von einer Inaktiv-Position in eine Aktiv-Position, wobei die Aktiv-Position eine gegenüber einer zu dem Haushaltgerät benachbarten Fläche versetzte Position repräsentiert. Dabei wird lediglich beispielhaft im Betrieb das Gerät ein kurzes Stück aus einer Nische einer Einbauküchenzeile herausgefahren.

Eine an dem Haushaltgerät angeordneten Fläche bzw. zu dem Haushaltgerät benachbarte Fläche ist beispielsweise ein Element eines Küchenmöbels wie die Tür eines benachbarten Schranks oder eine Arbeitsplatte.

Weiterhin umfasst das Verfahren 200 einen Schritt 210 des Projizierens der Geräteinformation auf die an dem Haushaltgerät angeordnete Fläche, um die Geräteinformation sichtbar zu präsentieren. Dabei wird lediglich beispielhaft mittels einer Projektionseinheit die Geräteinformationen auf eine Möbelfläche eines anderen Haushaltgeräts projiziert. Bei der Geräteinformation handelt es sich lediglich beispielhaft um eine Information über den aktiven Zustand des Haushaltgeräts sowie lediglich beispielhaft die verbleibende Restzeit eines gewählten Programms. Dabei wird die Geräteinformationen in diesem Ausführungsbeispiel in Form eines Klartextes und lediglich beispielhaft für eine vorbestimmte Zeitspanne durchgeführt, wobei die Zeitspanne in diesem Ausführungsbeispiel der Zeitspanne des ausgewählten Programms entspricht.

In einem anderen Ausführungsbeispiel kann die Geräteinformationen zusätzlich oder alternativ weitere aktuelle Statusinformationen zu dem gewählten Programm sowie Handlungsaufforderungen oder Fehler- beziehungsweise Störungsmeldungen umfassen. Zudem kann die Geräteinformation optional in Form von Bildern oder Symbolen und zusätzlich oder alternativ in Form von farbigem Licht projiziert werden und die Projektion kann bei aktivem Gerät situativ erfolgen, zum Beispiel bei Annäherung, Ansprache oder Geste einer sich nähernden Person.

Figur 3 zeigt ein Ablaufdiagramm eines Ausführungsbeispiels eines Verfahrens 200 zum Präsentieren einer Geräteinformation eines verblendeten Haushaltgeräts. Das hier dargestellte Verfahren 200 entspricht oder ähnelt dem in der vorangegangenen Figur 2 beschriebenen Verfahren, mit dem Unterschied, dass es zusätzliche Schritte aufweist. So folgt in diesem Ausführungsbeispiel auf Schritt 205 des Bewegens ein Schritt 300 des Einlesens eines Aktivierungssignals. Dabei repräsentiert das Aktivierungssignal lediglich beispielhaft eine Spracheingabe einer Person, wobei in diesem Ausführungsbeispiel das Projizieren der Geräteinformation ansprechend auf das Aktivierungssignal erfolgt. In einem anderen Ausführungsbeispiel kann der Schritt des Einlesens auch vor dem Schritt des Bewegens erfolgen. Dabei kann das Aktivierungssignal lediglich beispielhaft eine manuelle Eingabe repräsentieren, wobei sowohl das Bewegen des Haushaltgeräts als auch das Projizieren der Geräteinformation ansprechend auf das Aktivierungssignal erfolgen kann.

In diesem Ausführungsbeispiel folgt auf den Schritt 300 des Einlesens ein Schritt 305 des Erfassens eines aktuellen Betriebszustand des Haushaltgeräts. Dabei werden lediglich beispielhaft aktuelle Statusmeldungen, Handlungsaufforderungen und Störungen als aktuelle Geräteinformationen erfasst und im anschließenden Schritt 210 des Projizierens wird die entsprechende Geräteinformation lediglich beispielhaft für eine vorbestimmte Zeitspanne von beispielhaft zwei Minuten auf die am Haushaltgerät angeordnete Fläche projiziert.

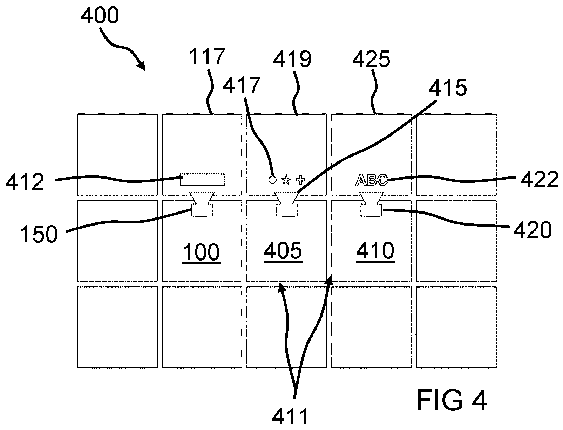

Figur 4 zeigt eine schematische Frontansicht einer Küchenzeile 400 mit verblendeten Haushaltgeräten 100, 405, 410 gemäß einem Ausführungsbeispiel. Das hier dargestellte Haushaltgerät 100 entspricht oder ähnelt dem in der vorangegangenen Figur 1 beschriebenen Haushaltgerät. Neben dem Haushaltgerät 100 sind in diesem Ausführungsbeispiel ein weiteres Haushaltgerät 405 und ein zusätzliches Haushaltgerät 410 angeordnet. Alle drei Haushaltgeräte 100, 405, 410 sind in diesem Ausführungsbeispiel als Teil der Küchenzeile 400 verblendet und mit einem Verfahren, wie es in den vorangegangenen Figuren 2 und 3 beschrieben wurde, steuerbar. Statt unmittelbar aneinanderzugrenzen weisen die verblendeten Haushaltgeräte 100, 405, 410, die auch als Vi-Geräte bezeichnet werden können, in diesem Ausführungsbeispiel einen Spalt 411 zueinander auf, ebenso wie zu angrenzenden Möbelfronten, zwischen denen die Haushaltgeräte 100, 405, 410 angeordnet sind. Dabei umfasst das Haushaltgerät 100 eine Projektionseinheit 150, die in diesem Ausführungsbeispiel ausgebildet ist, um eine Geräteinformation 412 als Licht in verschiedenen Farben auszugeben und auf eine angrenzende Fläche 117 zu projizieren. In ähnlicher Weise umfasst das weitere Haushaltgerät 405 eine weitere Projektionseinheit 415, die lediglich beispielhaft ausgebildet ist, um eine weitere Geräteinformation 417 in Form von Bildern und Symbolen auszugeben und auf eine weitere angrenzende Fläche 419 zu projizieren. Zudem umfasst das zusätzliche Haushaltgerät 410 eine zusätzliche Projektionseinheit 420, die lediglich beispielhaft ausgebildet ist, um eine zusätzliche Geräteinformation 422 als Klartext auszugeben und auf eine zusätzliche angrenzende Fläche 425 zu projizieren. In einem anderen Ausführungsbeispiel können die Haushaltgeräte auch Einbaugeräte einer Schrankwand oder eines Regals ausgeführt und mit entsprechenden Möbelfronten verblendet sein.

## Patentansprüche

1. Verfahren (200) zum Präsentieren einer Geräteinformation (412) eines mit einer Blende (110) verblendeten Haushaltgeräts (100), wobei das Verfahren (200) folgende Schritte umfasst:
• Bewegen (205) des Haushaltgeräts (100) ansprechend auf ein Bewegungssignal (135) mittels einer Bewegungseinheit (140) von einer Inaktiv-Position in eine Aktiv-Position, wobei das die Aktiv-Position eine gegenüber der Inaktiv-Position versetzte Position repräsentiert,
wobei bei der Aktiv-Position das Haushaltgerät (100) relativ zu einer dem Haushaltgerät (100) benachbarten Fläche (117) einer weiteren Blende (115) versetzt ist;
wobei bei der Inaktiv-Position die Blende (110) und die weitere Blende (115) auf einer Ebene angeordnet sind, und wobei die Bewegungseinheit (140) einen steuerbaren Elektromotor und eine mit dem Elektromotor gekoppelte Mechanik zum Verfahren des Haushaltsgeräts (100) umfasst, und
• Projizieren (210) der Geräteinformation (412) auf die Fläche (117) mittels eines Projektionssignal (145) durch eine Projektionseinheit (150), um die Geräteinformation (412) sichtbar zu präsentieren.

2. Verfahren (200) gemäß dem vorangegangenen Anspruch, mit einem Schritt (300) des Einlesens eines Aktivierungssignals (160) vor dem Schritt (210) des Projizierens, wobei das Projizieren der Geräteinformation (412) ansprechend auf das Aktivierungssignal (160) erfolgt.

3. Verfahren (200) gemäß dem vorangegangenen Anspruch, wobei das Aktivierungssignal (160) ein akustisches Signal und/oder eine Annäherung einer Person (165) und/oder eine vorbestimmte Geste der Person (165) repräsentiert.

4. Verfahren (200) gemäß einem der vorangegangenen Ansprüche, mit einem Schritt (305) des Erfassens eines aktuellen Betriebszustand des Haushaltgeräts (100), wobei im Schritt (210) des Projizierens die Geräteinformation (412) den erfassten Betriebszustand repräsentiert.

5. Verfahren (200) gemäß einem der vorangegangenen Ansprüche, wobei im Schritt (210) des Projizierens die Geräteinformation (412) in Form eines Klartextes und/oder in Form eines Bildes und/oder in Form von farbigem Licht projiziert wird.

6. Verfahren (200) gemäß einem der vorangegangenen Ansprüche, wobei der Schritt (210) des Projizierens für eine vorbestimmte Zeitspanne durchgeführt wird.

7. Haushaltgerät (100) eingerichtet zum Durchführen des Verfahrens (200) gemäß einem der vorangegangenen Ansprüche, wobei das Haushaltsgerät (100) eine Vorrichtung (130) umfasst, um ein Bewegungssignal (135) an eine Bewegungseinheit (140) des Haushaltsgeräts (190) zum Bewegen des Haushaltgeräts (100) bereitzustellen, und um ein Projektionssignal (145) an eine Projektionseinheit (150) zum Projizieren einer Geräteinformation (412) bereitzustellen, wobei das Haushaltgerät (100) mit einer Blende (110) verblendet oder verblendbar ist.

8. Haushaltgerät (100) gemäß dem vorangegangenen Anspruch, wobei die Projektionseinheit (150) an einer Kante (155) des Haushaltgeräts (100) angeordnet ist.

## Claims

1. Method (200) for presenting appliance-related information (412) of a domestic appliance (100) that is covered with a panel (110), wherein the method (200) comprises the following steps:
• moving (205) the domestic appliance (100) in response to a movement signal (135) by means of a movement unit (140) from an inactive position to an active position, wherein the active position represents a position offset from the inactive position,
wherein, in the active position, the domestic appliance (100) is offset relative to a surface (117) of a further panel (115) adjacent to the domestic appliance (100);
wherein, in the inactive position, the panel (110) and the further panel (115) are arranged on one plane, and wherein the movement unit (140) comprises a controllable electric motor and a mechanism coupled to the electric motor for moving the domestic appliance (100), and
• projecting (210) the appliance-related information (412) onto the surface (117) by means of a projection signal (145) using a projection unit (150) in order to visibly present the appliance-related information (412).

2. Method (200) according to the preceding claim, comprising a step (300) of reading in an activation signal (160) before the projection step (210), wherein the appliance-related information (412) is projected in response to the activation signal (160).

3. Method (200) according to the preceding claim, wherein the activation signal (160) represents an acoustic signal and/or an approach of a person (165) and/or a predetermined gesture of the person (165).

4. Method (200) according to any of the preceding claims, comprising a step (305) of detecting a current operating state of the domestic appliance (100), wherein, in the projection step (210), the appliance-related information (412) represents the detected operating state.

5. Method (200) according to any of the preceding claims, wherein, in the projection step (210), the appliance-related information (412) is projected in the form of plain text and/or in the form of an image and/or in the form of coloured light.

6. Method (200) according to any of the preceding claims, wherein the projection step (210) is carried out for a predetermined period of time.

7. Domestic appliance (100) designed to carry out the method (200) according to any of the preceding claims, wherein the domestic appliance (100) comprises a device (130) for providing a movement signal (135) to a movement unit (140) of the domestic appliance (190) in order to move the domestic appliance (100), and for providing a projection signal (145) to a projection unit (150) in order to project appliance-related information (412), wherein the domestic appliance (100) is or can be covered with a panel (110).

8. Domestic appliance (100) according to the preceding claim, wherein the projection unit (150) is arranged on an edge (155) of the domestic appliance (100).

## Revendications

1. Procédé (200) pour la présentation d'une information d'appareil (412) d'un appareil électroménager (100) revêtue d'un écran (110), dans lequel le procédé (200) comprend les étapes suivantes :
• déplacement (205) de l'appareil électroménager (100) d'une position inactive à une position active au moyen d'une unité de déplacement (140) en réponse à un signal de déplacement (135), dans lequel la position active représente une position décalée par rapport à la position inactive,
dans lequel, en position active, l'appareil électroménager (100) est décalé par rapport à une surface (117) d'un autre écran (115), laquelle est adjacente à l'appareil électroménager (100) ;
dans lequel, en position inactive, l'écran (110) et l'autre écran (115) sont disposés sur un plan, et dans lequel l'unité de déplacement (140) comprend un moteur électrique pouvant être commandé et un mécanisme couplé au moteur électrique pour le déplacement de l'appareil électroménager (100), et
• projection (210) d'une information d'appareil (412) sur la surface (117) au moyen d'un signal de projection (145) par une unité de projection (150) afin de présenter de manière visible l'information d'appareil (412).

2. Procédé (200) selon la revendication précédente, comportant une étape (300) de lecture d'un signal d'activation (160) avant l'étape (210) de projection, dans lequel la projection de l'information d'appareil (412) est effectuée en réponse au signal d'activation (160).

3. Procédé (200) selon la revendication précédente, dans lequel le signal d'activation (160) représente un signal acoustique et/ou un rapprochement d'une personne (165) et/ou un geste prédéfini de la personne (165).

4. Procédé (200) selon l'une des revendications précédentes, comportant une étape (305) de détection d'un état de fonctionnement actuel de l'appareil électroménager (100), dans lequel, à l'étape (210) de projection, l'information d'appareil (412) représente l'état de fonctionnement détecté.

5. Procédé (200) selon l'une des revendications précédentes, dans lequel, à l'étape (210) de projection, l'information d'appareil (412) est projetée sous la forme d'un texte en clair et/ou sous la forme d'une image et/ou sous la forme d'une lumière colorée.

6. Procédé (200) selon l'une des revendications précédentes, dans lequel l'étape (210) de projection est mise en œuvre pendant une période prédéfinie.

7. Appareil électroménager (100) configuré pour mettre en œuvre le procédé (200) selon l'une des revendications précédentes, dans lequel l'appareil électroménager (100) comprend un dispositif (130) afin de fournir un signal de déplacement (135) à une unité de déplacement (140) de l'appareil électroménager (190) pour le déplacement de l'appareil électroménager (100), et afin de fournir un signal de projection (145) à une unité de projection (150) pour la projection d'une information d'appareil (412), dans lequel l'appareil électroménager (100) est revêtu ou peut être revêtu d'un écran (110).

8. Appareil électroménager (100) selon la revendication précédente, dans lequel l'unité de projection (150) est disposée sur un bord (155) de l'appareil électroménager (100).
